# EUROPEAN PATENT APPLICATION

(11) **EP 4 832 074 A1**
(43) Date of publication of application: **28.10.2026**
(21) Application number: 24908284.3
(22) Date of filing: 16.12.2024
(51) Int. Cl.: H01M 4/134, H01M 4/1395, H01M 4/02

(54) **LITHIUM METAL NEGATIVE ELECTRODE FOR LITHIUM SECONDARY BATTERY AND METHOD FOR MANUFACTURING SAME**

(30) Priority: 18.12.2023 KR 20230184179
(71) Applicant: POSCO Holdings Inc., Pohang-si, Gyeongsangbuk-do 37859 (KR)
(72) Inventor: KIM, Jinhong, Pohang-si, Gyeongsangbuk-do 37859 (KR); BAE, Hongyeul, Pohang-si, Gyeongsangbuk-do 37859 (KR); LEE, Garam, Pohang-si, Gyeongsangbuk-do 37859 (KR)
(74) Representative: Pfenning, Meinig & Partner mbB
(86) International application number: PCT/KR2024/097015
(87) International publication number: WO 2025/136002

(57) **Abstract**

The present invention relates to a lithium metal negative electrode and a method for manufacturing the same, wherein the lithium metal negative electrode of the present invention includes a current collector, a lithium metal thin-film layer positioned on at least one surface of the current collector, and a film positioned on a surface of the lithium metal thin-film layer, and includes an organic layer disposed spaced apart in the lithium metal thin-film layer.

## Description

### [TECHNICAL FIELD]

The present invention relates to a lithium secondary battery, and more particularly, to a lithium metal negative electrode for a lithium secondary battery and a method for manufacturing the same.

### [BACKGROUND ART]

For reducing the cost and increasing the energy density of secondary batteries, it is indispensable to use a lithium metal negative electrode as a negative electrode of a lithium secondary battery. Specifically, recently, all-solid-state batteries have attracted attention as next-generation batteries for high energy density, such as for electric vehicle (EV) applications.

Since an all-solid-state battery does not use a liquid electrolyte, it has advantages in various aspects, such as excellent stability, the ability to operate at a high voltage, improved energy density of a battery pack due to reduction of cooling and safety-related auxiliary materials, and operability over a wide temperature range. In order to substantially implement high energy density in such an all-solid-state battery, a thick graphite-based negative electrode material having low capacity should be replaced with thin lithium having high capacity, and in consideration of economic feasibility and energy density, a thin-film lithium metal negative electrode having a thickness of substantially 10 to 20 µm is required.

In general, in the case of a lithium metal negative electrode, there is difficulty in a technology for manufacturing lithium metal thinly through a commercialized process, and dendrite growth caused by non-uniform current density and electrochemical reaction during charging and discharging of a secondary battery has been a problem. This induces continuous side reactions with an electrolyte and may lead to an internal short circuit in which a negative electrode and a positive electrode contact each other. Such dendrite growth may also cause serious problems in low lifespan characteristics and stability.

Various methods for increasing lifespan by suppressing the dendrite growth have been proposed, but it is still difficult to simultaneously implement high energy density through thinning of lithium and sufficient lifespan characteristics. Therefore, there is an urgent need to develop a technology that improves energy density of a lithium secondary battery by applying a lithium metal negative electrode and, at the same time, has excellent charge/discharge characteristics and reproducibility of the battery.

### [DETAILED DESCRIPTION OF THE INVENTION]

### [Technical Problem]

According to one technical embodiment to be solved by the present invention, a lithium metal negative electrode for a lithium secondary battery is intended to provide a lithium secondary battery in which lithium ion conductivity is improved to increase a lithium stacking rate, and charge/discharge lifespan characteristics are improved.

According to another embodiment of the present invention, a method for manufacturing a lithium metal negative electrode for a lithium secondary battery is intended to provide a method for manufacturing a lithium metal negative electrode for a lithium secondary battery having the above-described advantages.

### [Technical Solution]

A lithium metal negative electrode according to one embodiment of the present invention includes a current collector, a lithium metal thin-film layer positioned on at least one surface of the current collector, and a film positioned on a surface of the lithium metal thin-film layer, includes organic layers disposed spaced apart from each other in the lithium metal thin-film layer, and may satisfy a ratio of an N component of an EDAX value of the organic layer of 3 to 15.

(This means a ratio of (an average of five peak values)/(an average of four lowest values between respective peaks) in a line analysis result for the N component of the EDAX value of the organic layer.)

In one embodiment, a ratio of an F component of the EDAX value of the organic layer may satisfy 3 to 15.

(This means a ratio of (an average of five peak values)/(an average of four lowest values between respective peaks) in a line analysis result for the F component of the EDAX value of the organic layer.)

In one embodiment, the organic layer may include a Li-N-C-H-O-based ionic compound.

In one embodiment, the lithium metal thin-film layer may have a flat surface microstructure without dendritic protrusions, and may include a columnar structure extending upward from the current collector.

In one embodiment, the organic layer may be disposed at an interface of the columnar structure.

In one embodiment, the columnar structure may satisfy a ratio of a major axis to a minor axis of 1.2 to 3.0.

A method for manufacturing a lithium metal negative electrode according to another embodiment of the present invention includes electrically insulating a current collector and a lithium supply source in a plating solution and then stacking the current collector and the lithium supply source by constraining them from both directions, and applying current in multiple stages between the current collector and the lithium supply source to simultaneously form a metal thin-film layer and a film on at least one surface of the current collector, wherein a temperature of the plating solution may be 10 to 50°C.

In one embodiment, the applying of current in multiple stages between the current collector and the lithium supply source to simultaneously form the metal thin-film layer and the film on at least one surface of the current collector may include a preliminary electrodeposition step and a main electrodeposition step of applying a higher current than the preliminary electrodeposition step.

In one embodiment, the preliminary electrodeposition step may include a first electrodeposition step and a second electrodeposition step in which different currents are applied.

In one embodiment, the first electrodeposition step may apply a current of 0.48 mA/cm² or less.

In one embodiment, the second electrodeposition step may apply a current of 0.3 to 1.0 mA/cm².

In one embodiment, the main electrodeposition step may apply a current of 0.8 to 10.0 mA/cm².

In one embodiment, the plating solution may include a nitrogen-based compound.

In one embodiment, the nitrogen-based compound may be at least one selected from the group consisting of lithium nitrate, lithium bis(fluorosulfonyl)imide, lithium bis(trifluoromethane sulfonimide), caprolactam, N-methyl-caprolactam, triethylamine, and tributylamine.

In one embodiment, the plating solution may include the nitrogen-based compound in an amount of 1 wt% to 100 wt% based on 100 wt% of the plating solution.

### [Advantageous Effects]

A lithium metal negative electrode for a lithium secondary battery according to one embodiment of the present invention includes both a lithium metal thin-film layer and a film positioned on at least one surface of the lithium metal thin-film layer, thereby providing a homogeneous interface, improving lithium ion conductivity to increase a lithium stacking rate, and providing a lithium secondary battery having improved charge/discharge lifespan characteristics.

A method for manufacturing a lithium metal negative electrode for a lithium secondary battery according to another embodiment of the present invention provides a method for manufacturing a lithium metal negative electrode having the above-described advantages.

### [BRIEF DESCRIPTION OF THE DRAWINGS]

FIGS. 1 and 2 schematically show lithium metal negative electrodes according to embodiments, respectively.
FIGS. 3 and 4 schematically show manufacturing processes of lithium metal negative electrodes according to embodiments, respectively.
FIG. 5 is a photograph of a microstructure of a lithium metal negative electrode according to one embodiment of the present invention.
FIG. 6 is a drawing for calculating a ratio of EDAX peak values of a film layer of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

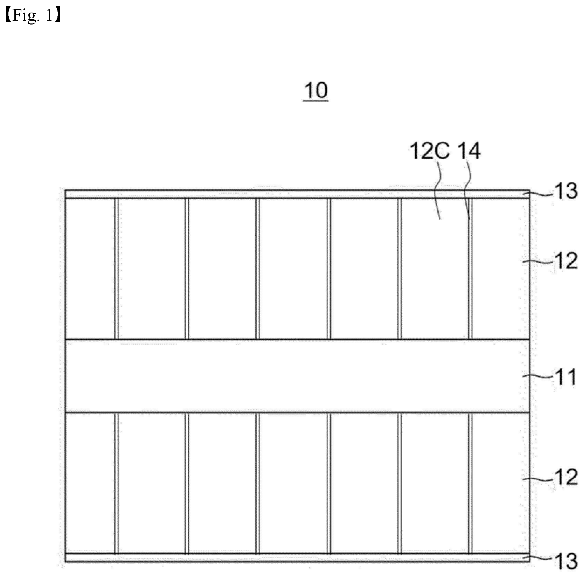

FIG. 1 schematically shows a lithium metal negative electrode according to one embodiment.

Referring to FIG. 1, the lithium metal negative electrode 10 according to one embodiment includes a current collector 11, a lithium metal thin-film layer 12, and a film 13. Specifically, in the lithium metal negative electrode 10 according to the present embodiment, lithium metal thin-film layers 12 are positioned on both surfaces of the current collector 11, and films 13 are respectively positioned on surfaces of the lithium metal thin-film layers 12. More specifically, the lithium metal negative electrode 10 includes organic layers 14 disposed spaced apart from each other in the lithium metal thin-film layer 12.

The current collector 11 is for electrical connection in a battery. The current collector 11 may have a form of a thin film (foil), but is not limited thereto, and may have, for example, a form of a mesh, a foam, a rod, a wire, or a sheet woven from wire or fiber.

As a material of the current collector 11, a material having electrical conductivity and having limited reactivity with lithium may be used. As the material of the current collector 11, for example, any one of copper, nickel, titanium, stainless steel, iron, gold, platinum, silver, tantalum, ruthenium, and alloys thereof, carbon, a conductive polymer, and composite fibers in which a conductive layer is coated on a non-conductive polymer, or a combination thereof may be used.

When the thickness of the current collector 11 is large, the weight of the battery increases and the energy density of the battery decreases, and when the thickness of the current collector 11 is small, there is a risk of overheating damage during high-current operation and the current collector may be damaged by tension during a battery manufacturing process. Accordingly, the thickness of the current collector 11 may be in a range of 1 µm to 50 µm.

The lithium metal thin-film layer 12 may be positioned on at least one surface of the current collector 11.

The lithium metal thin-film layer 12 is characterized by having a smooth and dense surface microstructure without dendritic protrusions and including a columnar structure 12C extending upward from the current collector 11.

In the present invention, the columnar structure 12C included in the lithium metal thin-film layer 12 can be implemented by forming the lithium metal thin-film layer 12 using an electrochemical plating method using a plating solution including appropriate components. The average diameter of the columnar structure 12C may be in a range of 0.1 µm to 100 µm, more specifically 5 µm to 40 µm.

When the average diameter of the columnar structure 12C is 0.1 µm or more, the surface uniformity of the lithium metal thin-film layer 12 is excellent, and thus, when the lithium metal negative electrode according to the embodiment is applied to a battery, a lithium secondary battery having excellent electrochemical characteristics can be implemented. When the average diameter of the columnar structure 12C is 100 µm or less, the time required for the formation process of the lithium metal thin-film layer 12 can be reduced, thereby improving productivity.

This is because the average diameter of the columnar structure 12C can be adjusted by controlling conditions of an electrodeposition process. For example, when the current density is lowered during the electrodeposition process, the average diameter of the columnar structure 12C increases, and when the current density is increased, the average diameter of the columnar structure decreases. When the current density is lowered in order to increase the average diameter of the columnar structure 12C, the time required for the formation process of the lithium metal thin-film layer 12 becomes longer. In the present specification, the average diameter of the columnar structure 12C may be measured with respect to the surface microstructure of the lithium metal negative electrode 10 using the method of ASTM E 112.

In one embodiment, the columnar structure 12C may satisfy a ratio of a major axis to a minor axis of 1.5 to 5. Specifically, the columnar structure 12C may satisfy a ratio of a major axis to a minor axis of 1.5 to 2.5. Since the ratio of the major axis to the minor axis of the columnar structure 12C satisfies the above-described range, there is an advantage that the area of grain boundaries is reduced, thereby reducing a side reaction region with an electrolyte solution during charging and discharging.

When the ratio of the major axis to the minor axis of the columnar structure 12C deviates from the upper limit of the above-described range, the columnar structure 12C is close to a dendrite shape, and thus there is a problem in that additional growth of dendrites is caused during charging and discharging and lithium loss occurs. When the ratio of the major axis to the minor axis of the columnar structure 12C deviates from the lower limit of the above-described range, there is a problem in that an interface area of particles increases and side reactions with an electrolyte solution increase.

In one embodiment, the columnar structure 12C may satisfy an average width interval value of 1 to 20 µm. Specifically, the columnar structure 12C may satisfy an average width interval value of 5 to 10 µm. Since the average width interval value of the columnar structure 12C satisfies the above-described range, there is an advantage that side reactions with an electrolyte solution during charging and discharging are minimized by appropriately maintaining the area of particle interfaces.

When the average width interval value deviates from the upper limit of the above-described range, there is a problem in that charge/discharge performance deteriorates because an area of the organic layer 14, which has excellent ionic conductivity and serves as a protective film, is reduced. When the average width interval value deviates from the lower limit of the above-described range, there is a problem in that the size of particles becomes very small, and thus the grain boundary area greatly increases and side reactions with an electrolyte solution increase.

The average porosity of the lithium metal thin-film layer 12 may be 0.1% to 10%, more specifically 1% to 5%. When the average porosity of the lithium metal thin-film layer 12 exceeds 10%, the lithium metal thin-film layer 12 has a porous microstructure. In this case, when the lithium metal negative electrode according to the embodiment is applied to a lithium secondary battery, desorption and attachment of lithium in the lithium metal negative electrode 10 during charging and discharging occur non-uniformly, dendritic growth may be promoted, and battery capacity and charge/discharge lifespan may be reduced due to dendritic dead lithium or the like. In addition, when the lithium metal thin-film layer 12 is manufactured to have an average porosity as low as 0.1% or less, the time required for the formation process of the lithium metal thin-film layer 12 according to the embodiment increases, thereby reducing productivity.

Next, the thickness of the lithium metal thin-film layer 12 may be in a range of 0.1 µm to 200 µm, more specifically 0.1 µm to 30 µm. When the thickness of the lithium metal thin-film layer 12 is large, when the lithium metal negative electrode according to the embodiment is applied to a lithium secondary battery, the weight of the battery increases and the energy density decreases. In addition, since manufacturing time and cost increase in proportion to the thickness when forming the lithium metal thin-film layer 12, the thickness of the lithium metal thin-film layer 12 is preferably 200 µm or less.

When the thickness of the lithium metal thin-film layer 12 is too small, when the lithium metal negative electrode according to the embodiment is applied to a lithium secondary battery, the charge/discharge lifespan of the battery decreases. Specifically, during charging and discharging of the battery, lithium in the battery is generally gradually consumed by side reactions between lithium included in an active material and an electrolyte solution, thereby reducing battery capacity. However, when the thickness of the lithium metal thin-film layer 12 is small, the amount of lithium retained to replenish lithium consumed during charging and discharging decreases, and thus the charge/discharge lifespan of the battery deteriorates. Therefore, the thickness of the lithium metal thin-film layer 12 is preferably 0.1 µm or more.

The thickness of the lithium metal thin-film layer 12 can be easily controlled by adjusting electrodeposition process conditions such as current density and electrodeposition time in the formation process of the lithium metal thin-film layer 12 using an electrochemical plating method.

The lithium metal negative electrode 10 includes the film 13 positioned on the surface of the lithium metal thin-film layer 12. The film 13 is formed by a reaction between electrodeposited lithium metal and a plating solution during the manufacturing process of the lithium metal thin-film layer 12, and the thickness, composition, characteristics, and the like of the film 13 can be controlled by adjusting the composition of the plating solution used and conditions of the electrodeposition process.

The thickness of the film 13 may be, for example, in a range of 2 nm to 2 µm, more specifically 10 nm to 500 nm. When the thickness of the film 13 positioned on the surface of the lithium metal thin-film layer 12 is too large, lithium ion conductivity decreases and interfacial resistance increases, and thus charge/discharge characteristics may deteriorate when applied to a battery. In addition, when the thickness of the film 13 is too small, the film 13 may be easily lost in the process of applying the lithium metal negative electrode according to the embodiment to a battery. Therefore, the film 13 is preferably formed uniformly and densely on the entire surface of the lithium metal thin-film layer 12 with a small thickness within the above thickness range.

In one embodiment, the organic layer 14 may be disposed spaced apart in the lithium metal thin-film layer 12. Specifically, the organic layer 14 may be disposed between the columnar structures 12C in the lithium metal thin-film layer 12. More specifically, the organic layer 14 may be disposed at interfaces between the columnar structures 12C.

In one embodiment, the organic layer 14 and the film 13 may be composed of the same material. Specifically, the organic layer 14 may be formed by the film 13 disposed on the surface during a lithium electrodeposition process to be described below being also disposed at the interfaces of the columnar structures 12C.

The lateral width of the organic layer 14 may be in a range of 2 nm to 2 µm, more specifically 100 nm to 1 µm. Since the columnar structure 12C satisfies the above-described range, the lateral width of the organic layer 14 has an advantage of securing ionic conductivity while serving as a protective layer for lithium particles. When the lateral width of the organic layer 14 is too large, lithium ion conductivity decreases and interfacial resistance increases, and thus charge/discharge characteristics may deteriorate when applied to a battery. In addition, when the lateral width of the organic layer 14 is too small, the organic layer 14 may be easily lost in the process of applying the lithium metal negative electrode according to the embodiment to a battery, or may not serve as a protective layer.

In one embodiment, the ratio of the N component of the EDAX value of the organic layer 14 may satisfy 3 to 15. The ratio of the N component of the EDAX value of the organic layer 14 may satisfy 5 to 12.

In one embodiment, the ratio of the F component of the EDAX value of the organic layer 14 may satisfy 3 to 15. The ratio of the F component of the EDAX value of the organic layer 14 may satisfy 4 to 10.

By satisfying the above-described ranges of the ratio of the N component and the ratio of the F component of the EDAX value of the organic layer 14, it can be confirmed that the organic layer 14 remains at the interface of the columnar structure in the electrode. In addition, by satisfying the above-described ranges of the ratio of the N component and the ratio of the F component of the EDAX value of the organic layer 14, the organic layer 14 may be disposed between columnar interfaces to improve charge/discharge performance of the electrode. In contrast, when the ratio of the N component and the ratio of the F component of the EDAX value of the organic layer 14 deviate from the lower limits of the above-described ranges, it is determined that the organic layer 14 is not included at the interface of the columnar structure, and there is a problem in that charge/discharge performance of the electrode is inferior.

In one embodiment, the film 13 and the organic layer 14 include a Li-N-C-H-O-based ionic compound. In the present embodiment, in the process of manufacturing the lithium metal thin-film layer 12 by an electrodeposition process, the film 13 and the organic layer 14 including the Li-N-C-H-O-based ionic compound may be formed by adjusting the composition and content of the plating solution.

The Li-N-C-H-O-based ionic compound may include Li-O, C-N, C-O, and C-H bonds. Specifically, the Li-N-C-H-O-based ionic compound may include a compound represented by any one of the following Chemical Formulas 1 and 2.

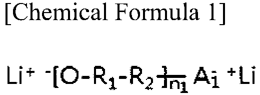

In Chemical Formula 1, R₁ and R₂ are each CHₘF₂₋ₘ, wherein m is one of 0, 1, and 2,
A1 is 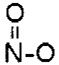 or 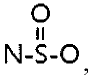 and
n1 is an integer of 1 to 10.

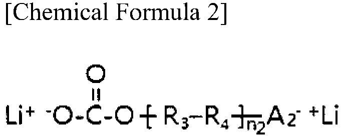

In Chemical Formula 2, R₃ and R₄ are each CHₘF₂₋ₘ, wherein m is one of 0, 1, and 2,
A2 is 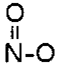 or 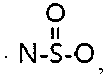 and
n2 is an integer of 1 to 10.

More specifically, the compound represented by Chemical Formula 1 may be at least one of compounds represented by the following Chemical Formula 1-1 and Chemical Formula 1-2.

The compound represented by Chemical Formula 2 may be at least one of compounds represented by the following Chemical Formula 2-1 and Chemical Formula 2-2.

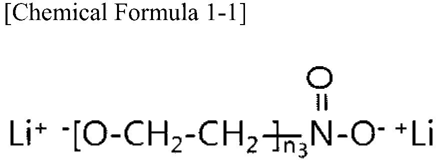

In Chemical Formula 1-1, n3 is an integer of 1 to 5.

Specifically, for example, when lithium nitrate (LiNO₃) is used as the nitrogen-based compound and the lithium metal thin-film layer 12 is formed through an electrodeposition process using a plating solution prepared by adding the lithium nitrate to an ether-based solvent in an appropriate amount, the film 13 including the compound represented by Chemical Formula 1-1 is formed on the surface of the lithium metal thin-film layer 12, and the organic layer 14 may be formed between the columnar structures 12C in the lithium metal thin-film layer 12.

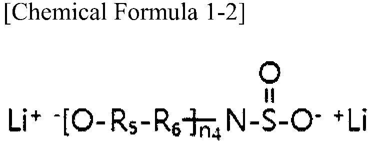

In Chemical Formula 1-2, R₅ and R₆ are each CHₘF₂₋ₘ, wherein m is one of 0, 1, and 2, and n4 is an integer of 1 to 5.

Specifically, for example, when lithium bis(fluorosulfonyl)imide (LiN(FSO₂)₂) is used as the nitrogen-based compound and the lithium metal thin-film layer 12 is formed through an electrodeposition process using a plating solution prepared by adding the lithium bis(fluorosulfonyl)imide to an ether-based solvent in an appropriate amount, the film 13 including the compound represented by Chemical Formula 1-2 is formed on the surface of the lithium metal thin-film layer 12, and the organic layer 14 may be formed between the columnar structures 12C in the lithium metal thin-film layer 12.

When lithium bis(fluorosulfonyl)imide (LiN(FSO₂)₂) is used as the nitrogen-based compound included in the plating solution, due to the fluorine (F) component included therein, in the Li-N-C-H-O-based ionic compound of the film 13, some of the C-H bonds in the -CH₂-structure may be substituted with C-F bonds, and the Li-N-C-H-O-based ionic compound may have a -CHmF2-m- structure, wherein m is one of 0, 1, and 2, as in Chemical Formula 1-2.

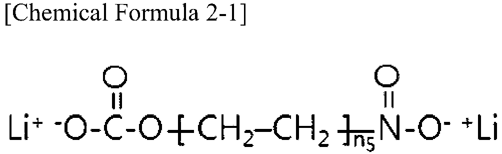

In Chemical Formula 2-1, n5 is an integer of 1 to 5.

Specifically, for example, when lithium nitrate is used as the nitrogen-based compound and the lithium metal thin-film layer 12 is formed through an electrodeposition process using a plating solution prepared by adding the lithium nitrate to a carbonate-based solvent in an appropriate amount, the film 13 including the compound represented by Chemical Formula 2-1 is formed on the surface of the lithium metal thin-film layer 12, and the organic layer 14 may be formed between the columnar structures 12C in the lithium metal thin-film layer 12.

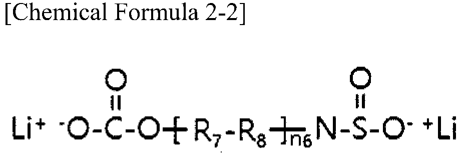

In Chemical Formula 2-2, R₇ and R₈ are each CHₘF₂₋ₘ, wherein m is one of 0, 1, and 2, and n6 is an integer of 1 to 5.

More specifically, for example, when lithium bis(fluorosulfonyl)imide is used as the nitrogen-based compound and the lithium metal thin-film layer 12 is formed through an electrodeposition process using a plating solution prepared by adding the lithium bis(fluorosulfonyl)imide to a carbonate-based solvent in an appropriate amount, the film 13 including the compound represented by Chemical Formula 2-2 may be formed on the surface of the lithium metal thin-film layer 12.

When lithium bis(fluorosulfonyl)imide (LiN(FSO₂)₂) is used as the nitrogen-based compound included in the plating solution, due to the fluorine (F) component included therein, in the Li-N-C-H-O-based ionic compound of the film 13, some of the C-H bonds in the -CH₂-structure may be substituted with C-F bonds, and the Li-N-C-H-O-based ionic compound may have a -CHmF2-m- structure, wherein m is one of 0, 1, and 2, as in Chemical Formula 2-2.

That is, in the present embodiment, by controlling the types and contents of the nitrogen-based compound and solvent included in the plating solution in the process of forming the lithium metal thin-film layer 12, the film 13 including at least one of the compounds represented by Chemical Formulas 1 and 2 can be implemented to be positioned on the surface of the lithium metal thin-film layer 12.

Meanwhile, the film 13 and the organic layer 14 may further include LiF in addition to the Li-N-C-H-O-based ionic compound. Specifically, for example, when lithium bis(fluorosulfonyl)imide (LiN(FSO₂)₂) is used as the nitrogen-based compound included in the plating solution, the film 13 and the organic layer 14 may further include LiF in addition to the Li-N-C-H-O-based ionic compound due to the fluorine (F) component included therein.

In addition, even when a fluorine-based compound such as fluoroethylene carbonate (FEC) is further included in the plating solution, the film 13 and the organic layer 14 may include LiF together with the Li-N-C-H-O-based ionic compound.

As described above, when the film 13 and the organic layer 14 further include LiF, the electrochemical performance of the film 13 and the organic layer 14 can be further improved by interaction with the Li-N-C-H-O-based ionic compound.

When the lithium metal negative electrode 10 including the film 13 and the organic layer 14 including the Li-N-C-H-O-based ionic compound as in the present embodiment is applied to a lithium secondary battery, side reactions between the electrolyte solution and the lithium metal thin-film layer 12 can be blocked. In addition, by making desorption and attachment of lithium uniform on the surface of the lithium metal thin-film layer 12 and suppressing dendrite growth, the charge/discharge lifespan of the lithium secondary battery can be improved.

In addition, it is possible to prevent defects from occurring in subsequent processes, such as packaging, transport, storage, and application of the lithium metal negative electrode 10 of the present embodiment to a battery. Since the lithium metal negative electrode 10 according to the present embodiment includes the film 13 positioned on the surface of the lithium metal thin-film layer 12 and the organic layer 14 disposed between the columnar structures 12C in the lithium metal thin-film layer 12, reactions between the lithium metal thin-film layer 12 and moisture and/or oxygen can be blocked in the above-described subsequent processes, and thus formation of a non-uniform native surface film on the surface of the lithium metal thin-film layer 12 can be very effectively prevented.

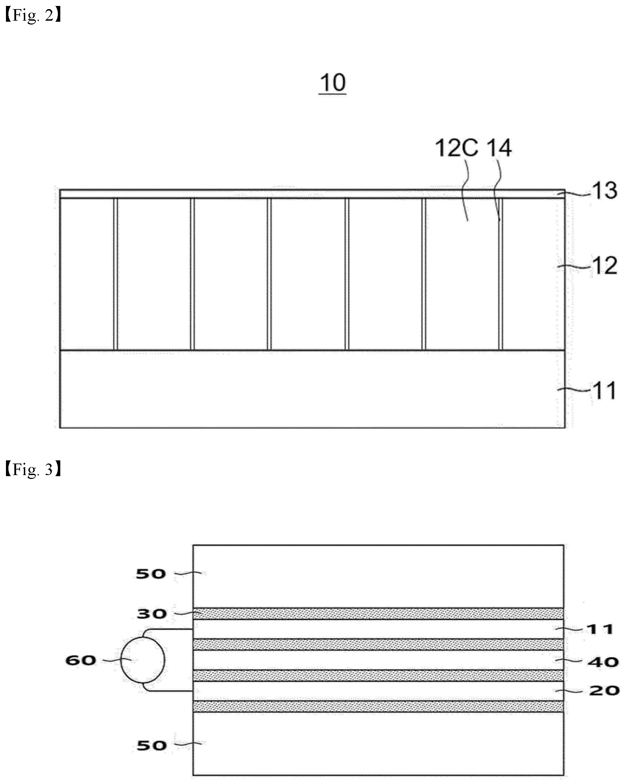

FIG. 2 schematically shows a lithium metal negative electrode for a secondary battery according to another embodiment.

Referring to FIG. 2, the lithium metal negative electrode 10 according to the present embodiment includes a current collector 11, a lithium metal thin-film layer 12 positioned on one surface of the current collector 11, a film 13 positioned on a surface of the lithium metal thin-film layer 12, and organic layers 14 disposed spaced apart from each other in the lithium metal thin-film layer 12.

Descriptions of the current collector 11, the lithium metal thin-film layer 12, the film 13, and the organic layer 14 of the present embodiment are the same as those described above in the embodiment with reference to FIG. 1. Therefore, detailed descriptions of the same or similar components will be omitted.

Next, a method for manufacturing a lithium metal negative electrode according to one embodiment of the present invention will be described.

The method for manufacturing a lithium metal negative electrode according to one embodiment includes electrically insulating a current collector and a lithium supply source in a plating solution and then stacking the current collector and the lithium supply source by constraining them from both directions, and applying current between the current collector and the lithium supply source to simultaneously form a metal thin-film layer, a film, and an organic layer on at least one surface of the current collector.

FIG. 3 schematically shows a manufacturing process of a lithium metal negative electrode 10 for a secondary battery according to one embodiment of the present invention.

Referring to FIG. 3, a current collector 11 on which a lithium metal thin-film layer is to be stacked and a lithium supply source 20 are immersed in a plating solution 30 for electrodeposition.

As the lithium supply source 20, for example, lithium metal, a lithium alloy, a foil in which the lithium metal or lithium alloy is pressed onto a current collector, or the like may be used. The current collector 11 is the same as described above, and reference may be made to the description of FIG. 1.

The plating solution 30 may be prepared by dissolving a lithium salt in a non-aqueous solvent. Specifically, the plating solution 30 is characterized by including a nitrogen-based compound as at least one of the lithium salt and the non-aqueous solvent.

The nitrogen-based compound may include, for example, at least one selected from the group consisting of lithium nitrate, lithium bis(fluorosulfonyl)imide, lithium bis(trifluoromethane sulfonimide), ε-caprolactam, N-methyl-ε-caprolactam, triethylamine, and tributylamine.

Among the nitrogen-based compounds, at least one of lithium nitrate, lithium bis(fluorosulfonyl)imide, and lithium bis(trifluoromethane sulfonimide) may be used as the lithium salt.

At least one of ε-caprolactam, N-methyl-ε-caprolactam, triethylamine, and tributylamine may be used as the non-aqueous solvent.

The plating solution 30 may include the nitrogen-based compound in an amount of 1 wt% to 100 wt%, more specifically 5 wt% to 90 wt%, 5 wt% to 70 wt%, or 5 wt% to 60 wt%, based on 100 wt% of the plating solution.

When the content of the nitrogen-based compound is less than 1 wt%, there is a problem in that the Li-N-C-H-O-based ionic compound is not properly formed in the film 13.

Meanwhile, the plating solution 30 may be prepared using only the nitrogen-based compound, but a general non-aqueous solvent may be added as an auxiliary solvent in consideration of viscosity of the plating solution. This is because, when the viscosity of the plating solution is too high, mobility of lithium ions decreases and ionic conductivity of the plating solution decreases, and thus the time required for the formation process of the metal thin-film layer 12 increases, thereby reducing productivity.

The auxiliary solvent may include, for example, at least one selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

The auxiliary solvent for adjusting the viscosity of the plating solution may be included in an amount of 5 wt% to 70 wt%, more specifically 10 wt% to 60 wt%, based on 100 wt% of the plating solution.

In one embodiment, the plating solution 30 may further include a fluorine-based compound. The fluorine-based compound may include, for example, at least one selected from the group consisting of lithium difluorophosphate, lithium hexafluorophosphate, lithium difluoro bis(oxalato)phosphate, lithium tetrafluoro oxalato phosphate, lithium difluoro oxalate borate, lithium difluoro oxalato borate, lithium tetrafluoro oxalato borate, fluoroethylene carbonate, difluoroethylene carbonate, and 1,1,2,2-tetrafluoroethyl 2,2,3,3-tetrafluoropropyl ether.

The plating solution 30 may include the fluorine-based compound in an amount of 0.1 wt% to 30 wt%, more specifically 1 wt% to 10 wt%, based on 100 wt% of the plating solution.

When the content of the fluorine-based compound is less than 0.1 wt%, interaction between the nitrogen-based compound and the fluorine-based compound in the plating solution does not smoothly occur, and thus there is a problem in that the effect of improving characteristics of the film 13 and the organic layer 14 of the manufactured lithium metal negative electrode 10 does not appear. When the content of the fluorine-based compound exceeds 30 wt%, LiF generation or the like due to direct reaction between the fluorine-based compound and lithium excessively occurs, and thus there is a problem in that electrochemical characteristics of the manufactured film 13 deteriorate.

Next, after an insulating film 40 is positioned between the current collector 11 and the lithium supply source 20, the current collector 11, the lithium supply source 20, and the insulating film 40 are stacked and constrained from both directions using a constraining device 50.

At this time, the constraining device 50 may employ a method generally used in the art, such as a manual clamping method or a uniaxial pressing method using hydraulic pressure or pneumatic pressure, and is not particularly limited.

In addition, as the insulating film 40, a separator material used in a lithium secondary battery may be used, and it is not particularly limited.

After configuring the electrodeposition equipment as described above, the film 13 and the lithium metal thin-film layer 12 are formed on the surface of the current collector 11 by applying current to the current collector 11 and the lithium supply source 20, respectively, using a power supply device 60. At this time, the current collector 11 is connected to a (-) electrode, and the lithium supply source 20 is connected to a (+) electrode.

The forming of the lithium metal thin-film layer and the film on at least one surface of the current collector 11 is performed by applying current between the current collector 11 and the lithium supply source 20.

The applied current may have an average current density of 0.1 mA/cm² to 100 mA/cm², more specifically 0.5 mA/cm² to 20 mA/cm², based on the area of the current collector. When the current density increases, a stacking rate of the lithium metal thin-film layer increases, and thus productivity increases, but there is a problem in that the characteristics of the film deteriorate and the performance of the manufactured lithium metal negative electrode decreases. Accordingly, the current density is preferably in the above range.

Through such current application, lithium moved from the lithium supply source 20 is electrodeposited on the surface of the current collector 11, thereby forming the lithium metal thin-film layer 12. At this time, the thickness of the lithium metal thin film can be easily controlled by controlling current density, electrodeposition time, electrodeposition process conditions, and the like.

In addition, the film 13 and the organic layer 14 may be formed using a reduction-decomposition reaction of the plating solution 30 on the surface of the current collector 11 and a reaction between the electrodeposited lithium metal thin-film layer and the plating solution 30. At this time, the thickness, composition, characteristics, and the like of the manufactured film may be controlled by adjusting the composition of the plating solution 30 and the electrodeposition process conditions.

That is, the method for manufacturing a lithium metal negative electrode according to the embodiments is characterized by simultaneously forming the lithium metal thin-film layer 12, the film 13, and the organic layer 14 by including an electrodeposition step using an electrodeposition process, which is an electrochemical plating method.

More specifically, the electrodeposition step is a method of stacking the lithium metal thin-film layer 12 on the surface of the current collector 11 by an electrochemical method by receiving lithium ions from the lithium supply source in a room-temperature and atmospheric-pressure process, for example, 30°C or less and 1 atm. Additionally, in order to improve the deposition rate of the lithium metal thin-film layer 12 or to more easily form the film 13 and the organic layer 14, the temperature of the electrodeposition process may be increased.

When the electrochemical plating method is used as described above, a lithium metal negative electrode can be economically manufactured, large-area stacking is easy, and the thickness of the lithium metal thin-film layer is also very easy to control. In addition, during the manufacturing process, it is possible to control a film having the above-described specific components to be uniformly and densely formed on the surface of the lithium metal thin-film layer. Therefore, when the lithium metal negative electrode manufactured by the method according to the present embodiment is applied to a lithium secondary battery, a lithium secondary battery having very excellent electrochemical performance can be implemented.

In one embodiment, the electrodeposition step may include a multi-stage electrodeposition step. Specifically, the multi-stage electrodeposition step may mean a step of performing electrodeposition a plurality of times at different current densities.

In one embodiment, the multi-stage electrodeposition step may include a preliminary electrodeposition step and a main electrodeposition step. The preliminary electrodeposition step may include a low-current electrodeposition section at the initial stage of lithium electrodeposition. The main electrodeposition step may be an electrodeposition step performed after the preliminary electrodeposition step, and may be a step of electrodepositing lithium under a higher current than the preliminary electrodeposition step.

Specifically, the preliminary electrodeposition step may be a step of performing electrodeposition at a low current at the initial stage of lithium electrodeposition. The preliminary electrodeposition step may be a step of maintaining the current in a range lower than a current of 1 mA/cm². By including the preliminary electrodeposition step, decomposition of additives included in the plating solution can be promoted, thereby improving charge/discharge performance of the electrode.

In one embodiment, the main electrodeposition step is an electrodeposition step performed after the preliminary electrodeposition step, and may be performed under a current of 0.8 to 10.0 mA/cm². Specifically, the main electrodeposition step may be performed under a current density of 0.9 to 5.0 mA/cm², and more specifically 1.0 to 4.0 mA/cm².

In one embodiment, the preliminary electrodeposition step may include a first electrodeposition step and a second electrodeposition step. Specifically, the preliminary electrodeposition step may be performed a plurality of times under a plurality of different current densities. More specifically, the first electrodeposition step may be performed at a current density lower than that of the second electrodeposition step.

In one embodiment, the first electrodeposition step may be performed under a current of 0.48 mA/cm² or less. Specifically, the first electrodeposition step may be performed under a current density of 0.4 mA/cm² or less, more specifically 0.05 to 0.4 mA/cm², and more specifically 0.1 to 0.3 mA/cm². As the first electrodeposition step is performed within the above-described range, decomposition of additives in the plating solution can be facilitated, and formation of the film 13 and the organic layer 14 can be easily controlled, thereby improving charge/discharge performance of the electrode.

In one embodiment, the second electrodeposition step may be performed under a current of 0.3 to 1.0 mA/cm². Specifically, the second electrodeposition step may be performed under a current density of 0.4 to 0.9 mA/cm², more specifically 0.45 to 0.75 mA/cm², and more specifically 0.45 to 0.55 mA/cm². As the second electrodeposition step is performed within the above-described range, decomposition of additives in the plating solution can be facilitated, and formation of the film 13 and the organic layer 14 can be easily controlled, thereby improving charge/discharge performance of the electrode.

In one embodiment, the first electrodeposition step and the second electrodeposition step may be performed for 10 minutes to 50 minutes, specifically 20 minutes to 40 minutes, and more specifically 25 minutes to 35 minutes.

As described above, in the preliminary electrodeposition step, the first electrodeposition step and the second electrodeposition step having different currents are sequentially performed, thereby more easily forming the film 13 and the organic layer 14 in the electrode and improving charge/discharge performance of the electrode.

In one embodiment, the electrodeposition step may be performed while the temperature of the plating solution is in a range of 10 to 55°C. More specifically, the electrodeposition step may be performed in a temperature range of 15 to 50°C, more specifically 20 to 45°C, and more specifically 25 to 40°C. By performing the electrodeposition step in the above-described temperature range, not only the film 13 but also the organic layer 14 can be easily formed in the electrode, thereby improving charge/discharge performance of the electrode.

Meanwhile, FIG. 3 illustrates a manufacturing process in which only one current collector 11 and only one lithium supply source 20 are positioned, but a plurality of current collectors 11 may be present.

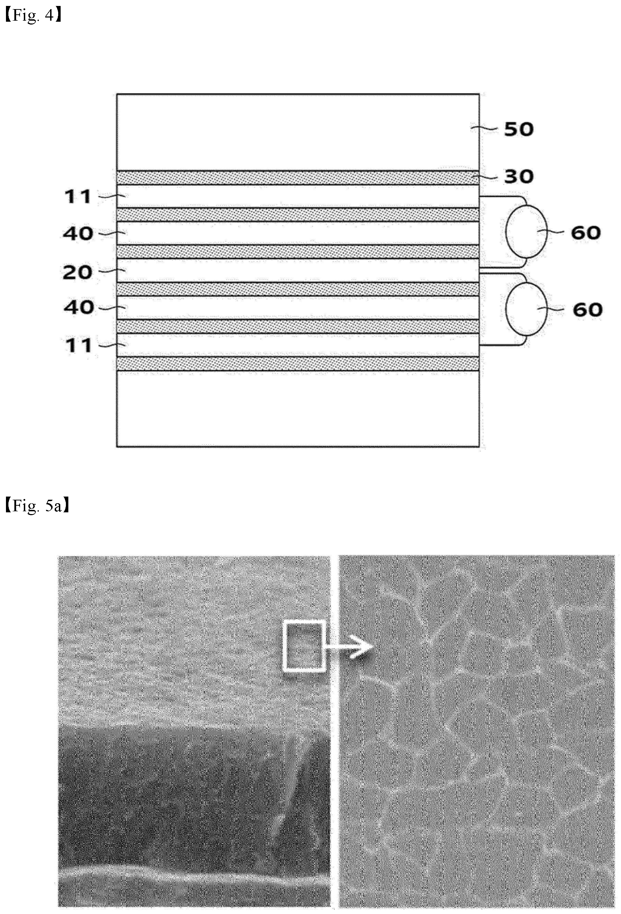

FIG. 4 schematically shows a manufacturing process of a lithium metal negative electrode according to another embodiment.

Referring to FIG. 4, according to the manufacturing process of the lithium metal negative electrode according to another embodiment, current collectors 11 may be positioned on both sides of the lithium supply source 20 with insulating films 40 interposed therebetween. The current collectors 11 and the lithium supply source 20 are respectively connected to the power supply device 60 to receive current, and lithium metal thin-film layers are formed on surfaces of both current collectors 11.

Similarly, a film having a desired composition and characteristics can be formed on the surface of the lithium metal thin-film layer by controlling a reduction-decomposition reaction of the plating solution 30 on the surface of the current collector 11 and a reaction between the electrodeposited lithium metal thin-film layer and the plating solution 30. The lithium metal negative electrode manufactured by the methods according to the embodiments may be usefully used as a negative electrode of a lithium secondary battery.

In one embodiment, the lithium secondary battery may include an electrode assembly including a positive electrode including a positive electrode active material, a negative electrode which is the lithium metal negative electrode of the present invention, and a separator disposed between the positive electrode and the negative electrode. Such an electrode assembly may be wound or folded and accommodated in a battery case.

Thereafter, an electrolyte may be injected into the battery case and sealed, thereby completing the secondary battery. At this time, the battery case may have a form such as a cylindrical form, a prismatic form, a pouch form, or a coin form.

The positive electrode may include a positive electrode active material layer and a positive electrode current collector. The positive electrode active material layer may include, for example, a Li compound including at least one metal among Ni, Co, Mn, Al, Cr, Fe, Mg, Sr, V, La, and Ce, and at least one non-metal element selected from the group consisting of O, F, S, P, and combinations thereof.

In one embodiment, a conductive material may be further added to the positive electrode active material layer. The conductive material may be, for example, carbon black, ultrafine graphite particles, fine carbon such as acetylene black, nano metal particle paste, or the like, but is not limited thereto.

The positive electrode current collector serves to support the positive electrode active material layer. As the positive electrode current collector, for example, an aluminum foil, a nickel foil, or a combination thereof may be used, but the present invention is not limited thereto.

As the electrolyte filled in the lithium secondary battery, a non-aqueous electrolyte solution, a solid electrolyte, or the like may be used. Specifically, the electrolyte may be a solid electrolyte. The non-aqueous electrolyte solution may include, for example, a lithium salt such as lithium hexafluorophosphate or lithium perchlorate, and a solvent such as ethylene carbonate, propylene carbonate, or butylene carbonate. In addition, as the solid electrolyte, for example, a gel polymer electrolyte in which an electrolyte solution is impregnated in a polymer electrolyte such as polyethylene oxide or polyacrylonitrile, or an inorganic solid electrolyte such as LiI or Li₃N may be used.

The separator separates the positive electrode and the negative electrode and provides a movement path for lithium ions, and any separator generally used in a lithium secondary battery may be used. Specifically, the separator may have low resistance to ion movement of the electrolyte and excellent ability to retain an electrolyte solution. The separator may be, for example, selected from glass fiber, polyester, polyethylene, polypropylene, polytetrafluoroethylene, or combinations thereof, and may be in a nonwoven fabric or woven fabric form. Meanwhile, when a solid electrolyte is used as the electrolyte, the solid electrolyte may also serve as the separator.

Hereinafter, embodiments of the present invention will be described in detail. However, these are presented as examples, the present invention is not limited thereby, and the present invention is defined only by the scope of the claims to be described below.

### <Experimental Example>

### Manufacture of Negative Electrode for Lithium Secondary Battery

### <Example 1>

### <Manufacture of Current Collector>

A copper foil current collector was prepared for use in the negative electrode for a lithium secondary battery of the present invention. Specifically, as the current collector, a copper foil having a thickness of about 15 µm was used.

### <Lithium Electrodeposition Process>

In order to form a lithium metal thin-film layer on the surface of the current collector, a lithium supply source and the current collector were stacked in a plating solution in an electrically insulated state, and then a lithium metal plate having a purity of 99.9% or more and a thickness of 500 µm was pressed onto a copper current collecting plate (Cu plate) using a power supply device and used. Current was applied using the lithium supply source and the current collector as a (+) electrode and a (-) electrode, respectively.

At this time, as current density of the process, among the preliminary electrodeposition steps, a first electrodeposition step was performed at 0.2 mA/cm² for 30 minutes, and a second electrodeposition step was performed at 0.5 mA/cm² for 30 minutes. Thereafter, as a third step, a main electrodeposition step was performed at 2.0 mA/cm² for 110 minutes, and the current density was gradually increased in three stages to manufacture a lithium metal thin-film layer having a thickness of about 20 µm. At this time, the temperature of the plating solution was maintained at 25°C. In addition, at this time, a film was formed on the surface of the lithium metal thin-film layer by controlling a reduction-decomposition reaction of the plating solution on the surface of the current collector, a reaction between the electrodeposited lithium metal thin-film layer and the plating solution, and the like.

At this time, the plating solution was prepared by introducing, into a 1,2-dimethoxyethane solvent, lithium bis(fluorosulfonyl)imide, which is a nitrogen-based compound, and lithium nitrate in amounts of 40 wt% and 10 wt%, respectively, based on 100 wt% of the plating solution, and introducing fluoroethylene carbonate, which is a fluorine-based compound, in an amount of 10 wt% based on 100 wt% of the plating solution.

### <Example 2>

The same procedure as in Example 1 was performed except that the temperature of the plating solution in the electrodeposition step was changed to 40°C.

### <Example 3>

The same procedure as in Example 1 was performed except that the current density of the main electrodeposition step in the electrodeposition step was changed to 1.0 mA/cm².

### <Example 4>

The same procedure as in Example 1 was performed except that the current density of the main electrodeposition step in the electrodeposition step was changed to 4.0 mA/cm².

### <Comparative Example 1>

The same procedure as in Example 1 was performed except that lithium was electrodeposited at a current density of 0.7 mA/cm² for 350 minutes, rather than performing the electrodeposition step in multiple stages such as preliminary and main electrodeposition steps.

### <Comparative Example 2>

The same procedure as in Example 1 was performed except that the preliminary electrodeposition step was performed as a single process at a current density of 0.2 mA/cm² for 60 minutes, rather than being divided into first and second electrodeposition steps, and thereafter, the main electrodeposition step was performed at a current density of 2.0 mA/cm² for 118 minutes.

### <Comparative Example 3>

The same procedure as in Example 1 was performed except that the preliminary electrodeposition step was performed as a single process at a current density of 0.5 mA/cm² for 60 minutes, rather than being divided into first and second electrodeposition steps, and thereafter, the main electrodeposition step was performed at a current density of 2.0 mA/cm² for 109 minutes.

### <Comparative Example 4>

The same procedure as in Example 1 was performed except that the temperature in the plating solution was 60°C.

### Manufacture of All-Solid-State Battery

An all-solid-state battery was manufactured by applying the negative electrode manufactured according to the above-described Examples, and charge/discharge lifespan was evaluated. For evaluation of an all-solid-state battery cell, a pressurized dedicated evaluation cell manufactured by TERRALEADER, which can maintain an inert atmosphere, was used. For manufacturing the all-solid-state battery cell, a sulfide-based argyrodite (Li₆PS₅Cl) solid electrolyte was used as an electrolyte, and the electrolyte was formed in a pellet form to have a thickness of about 0.7 mm. In order to secure a dense electrolyte, pressure was applied at 370 MPa.

Lithium having a thickness of 0.5 mm was attached to one surface of the electrolyte as a reference electrode, and the negative electrode manufactured according to the Examples and Comparative Examples was attached to the opposite surface. The reference electrode and evaluation electrode were attached to the solid electrolyte at a pressure of 50 MPa, and during charge/discharge evaluation, pressure was applied at 16 MPa in a dedicated evaluation cell.

### <Evaluation Example>

Table 1 below shows data on characteristics of the columnar crystals of lithium metal negative electrodes manufactured according to the Examples and Comparative Examples and characteristics of organic layers disposed spaced apart from each other in the lithium metal thin-film layer phase.

As the columnar crystal characteristics, a ratio of a major axis to a minor axis of the columnar crystals is shown, and as the organic layer characteristics, organic layer component analysis data is shown, and as an effect, charge/discharge characteristics when applied to a battery are shown.

Columnar crystal characteristics: The ratio of the major axis to the minor axis of the columnar crystals was calculated by measuring the lengths of the minor axis and the major axis of the columnar crystals using an ImageJ image program developed by NIH (National Institutes of Health) from surface and cross-sectional microstructure images observed with a GEMINI-500 scanning electron microscope manufactured by ZEISS. The length of the minor axis was defined as the average size of lithium particles included in an area of 50 µm in width and 50 µm in height, that is, 2500 µm², in the surface microstructure image, and the length of the major axis was calculated using the formula (lithium layer thickness/number of particles) in the cross-sectional microstructure image, and 10 points were selected and defined as an average value. The ratio of the major axis to the minor axis of the columnar crystals was measured from the lengths of the minor axis and the major axis.

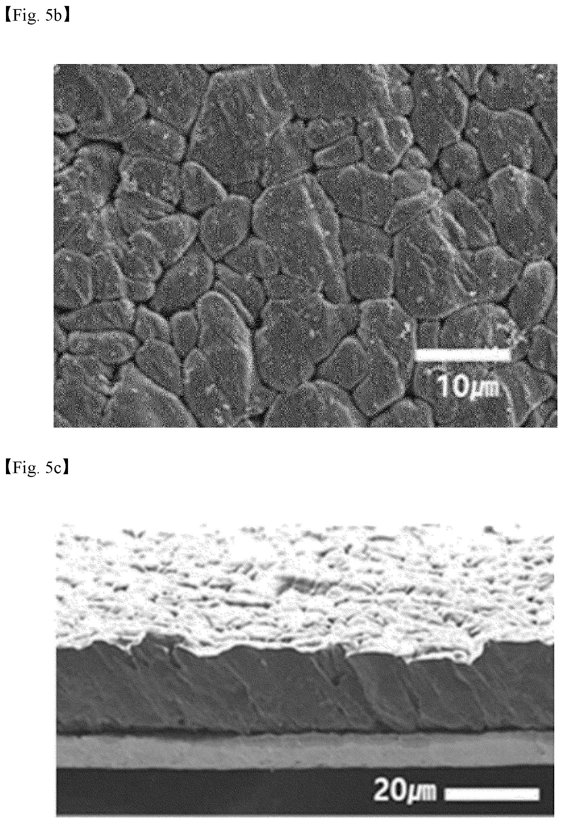

FIG. 5 is a photograph of a microstructure of a lithium metal negative electrode according to one embodiment of the present invention.

Referring to FIG. 5, the size of lithium particles can be confirmed from the surface microstructure of the lithium metal negative electrode, and this means the length of the minor axis of the columnar crystals. In addition, it can be confirmed from the cross-sectional microstructure that a thickness of about 20 µm is composed of one columnar crystal, and this means the length of the major axis of the columnar crystals.

Organic layer characteristics: A cross-section of lithium metal was line-analyzed to confirm whether an organic layer was formed. Analysis signals received from a GEMINI-500 scanning electron microscope manufactured by ZEISS were analyzed using an AZTEC program manufactured by OXFORD to analyze components of the organic layer. The line analysis was performed by scanning about 100 µm in the horizontal direction at a height corresponding to 1/2 of the lithium layer thickness based on the cross-section of the lithium layer, and the corresponding components were analyzed. Whether the organic layer was formed was determined by performing line analysis on a fluorine (F) component and a nitrogen (N) component, which are main components of the film layer formed by decomposition of plating solution additives. The EDAX peak ratio for each component was calculated as (an average of five peak values)/(an average of four lowest values between respective peaks).

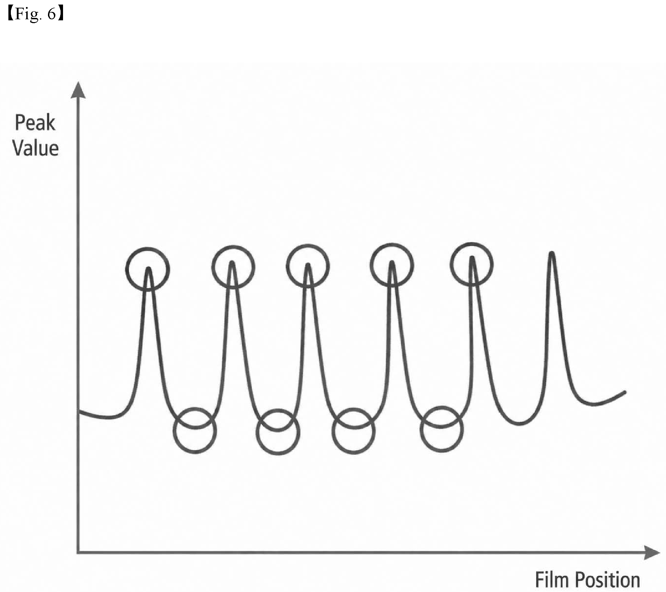

FIG. 6 is a drawing for calculating a ratio of EDAX peak values of a film layer of the present invention.

Referring to FIG. 6, the ratio of the EDAX peak values represents an average value of maximum values of peak values for five circled portions indicated at upper portions of the peak values, relative to an average value of lowest values for four circled portions indicated below the peak values.

Number of charge/discharge performance cycles: The reference electrode and evaluation electrode were attached to the solid electrolyte at a pressure of 50 MPa, and during charge/discharge evaluation, pressure was applied at 16 MPa in a dedicated evaluation cell. The charge/discharge evaluation was performed by defining one cycle as charging at a constant current of 2 mA/cm² for 0.5 hours and discharging at a constant current of 2 mA/cm² for 0.5 hours. The charge/discharge lifespan was defined as ending when a short circuit occurred between the reference electrode and the evaluation electrode during charging and discharging, or when the voltage between the two electrodes exceeded 2 V.

**[Table 1]**

| | Manufacturing Conditions | | | | Product Characteristics | | | Effect |
|---|---|---|---|---|---|---|---|---|
| Classificati on | First Current (mA/cm²) | Second Current (mA/cm²) | Third Current (mA/cm²) | Temperature (°C) | Columnar Crystal Ratio (Major Axis/Minor Axis) | Organic Layer EDAX Peak Ratio (F Component) | Organic Layer EDAX Peak Ratio (N Component) | (Charge/ Discharg e Performa nce) (cycles) |
| Exam ple 1 | 0.2 | 0.5 | 2.0 | 25 | 2.0 | 5 | 6 | 350 |
| Exam ple2 | 0.2 | 0.5 | 2.0 | 40 | 1.8 | 10 | 12 | 410 |
| Exam ple 3 | 0.2 | 0.5 | 1.0 | 25 | 2.5 | 7 | 8 | 300 |
| Exam ple 4 | 0.2 | 0.5 | 4.0 | 25 | 1.5 | 4 | 5 | 280 |
| Comp arativ e Exam ple 1 | 0.7 | | | 25 | 1.1 | 1.1 | 1.1 | 120 |
| Comp arativ e Exam ple 2 | 0.2 | | 2.0 | 25 | 2.0 | 10 | 2 | 150 |
| Comp arativ e Exam ple 3 | 0.5 | | 2.0 | 25 | 1.5 | 2 | 12 | 160 |
| Comp arativ e Exam ple 4 | 0.2 | 0.5 | 2.0 | 60 | 1.0 | 1.2 | 1.2 | 110 |

Referring to Table 1, when Examples 1 to 4, in which the preliminary electrodeposition step and the main electrodeposition step were performed, were compared with Comparative Example 1, it was confirmed that the columnar crystal ratio and the EDAX values of the organic layer of Comparative Example 1 were outside the ranges of the present invention, and the charge/discharge performance of the electrode of Comparative Example 1 was very inferior.

In addition, it was confirmed that, in Examples 1 to 4, in which the preliminary electrodeposition step was performed in multiple stages as the first electrodeposition step and the second electrodeposition step, compared with Comparative Examples 2 and 3, in which the preliminary electrodeposition step was not performed in multiple stages, the EDAX values of the organic layer did not satisfy the ranges of the present invention, and the charge/discharge performance was also inferior.

Looking at Example 1 and Comparative Example 4, it was confirmed that, in Comparative Example 4, in which the temperature of the plating solution was excessively high, the columnar crystal ratio and the EDAX values of the organic layer did not satisfy the ranges of the present invention, and the charge/discharge performance was excessively low.

The present invention is not limited to the above embodiments and may be manufactured in various different forms. A person having ordinary skill in the art to which the present invention pertains will understand that the present invention may be embodied in other specific forms without changing the technical spirit or essential features of the present invention. Therefore, the above-described embodiments should be understood as illustrative in all respects and not restrictive.

## Claims

1. A lithium metal negative electrode comprising:
a current collector;
a lithium metal thin-film layer positioned on at least one surface of the current collector;
and
a film positioned on a surface of the lithium metal thin-film layer,
wherein the lithium metal negative electrode includes an organic layer disposed spaced apart in the lithium metal thin-film layer, and
wherein a ratio of an N component of an EDAX value of the organic layer satisfies 3 to 15.
(This means a ratio of (an average of five peak values)/(an average of four lowest values between respective peaks) in a line analysis result for the N component of the EDAX value of the organic layer.)

2. The lithium metal negative electrode of claim 1,
wherein a ratio of an F component of the EDAX value of the organic layer satisfies 3 to 15.
(This means a ratio of (an average of five peak values)/(an average of four lowest values between respective peaks) in a line analysis result for the F component of the EDAX value of the organic layer.)

3. The lithium metal negative electrode of claim 1,
wherein the organic layer includes a Li-N-C-H-O-based ionic compound.

4. The lithium metal negative electrode of claim 1,
wherein the lithium metal thin-film layer has a flat surface microstructure without dendritic protrusions, and
includes a columnar structure extending upward from the current collector.

5. The lithium metal negative electrode of claim 4,
wherein the organic layer is disposed at an interface of the columnar structure.

6. The lithium metal negative electrode of claim 4,
wherein the columnar structure satisfies a ratio of a major axis to a minor axis of 1.2 to 3.0.

7. A method for manufacturing a lithium metal negative electrode, comprising:
electrically insulating a current collector and a lithium supply source in a plating solution and then stacking the current collector and the lithium supply source by constraining them from both directions; and
applying current in multiple stages between the current collector and the lithium supply source to simultaneously form a metal thin-film layer and a film on at least one surface of the current collector,
wherein a temperature of the plating solution is 10 to 50°C.

8. The method for manufacturing a lithium metal negative electrode of claim 7,
wherein the applying of current in multiple stages between the current collector and the lithium supply source to simultaneously form the metal thin-film layer and the film on at least one surface of the current collector includes a preliminary electrodeposition step and a main electrodeposition step of applying a higher current than the preliminary electrodeposition step.

9. The method for manufacturing a lithium metal negative electrode of claim 8,
wherein the preliminary electrodeposition step includes a first electrodeposition step and a second electrodeposition step in which different currents are applied.

10. The method for manufacturing a lithium metal negative electrode of claim 9,
wherein the first electrodeposition step applies a current of 0.48 mA/cm² or less.

11. The method for manufacturing a lithium metal negative electrode of claim 9,
wherein the second electrodeposition step applies a current of 0.3 to 1.0 mA/cm².

12. The method for manufacturing a lithium metal negative electrode of claim 8,
wherein the main electrodeposition step applies a current of 0.8 to 10.0 mA/cm².

13. The method for manufacturing a lithium metal negative electrode of claim 7,
wherein the plating solution includes a nitrogen-based compound.

14. The method for manufacturing a lithium metal negative electrode of claim 7,
wherein the nitrogen-based compound is at least one selected from the group consisting of lithium nitrate, lithium bis(fluorosulfonyl)imide, lithium bis(trifluoromethane sulfonimide), caprolactam, N-methyl-caprolactam, triethylamine, and tributylamine.

15. The method for manufacturing a lithium metal negative electrode of claim 7,
wherein the plating solution includes the nitrogen-based compound in an amount of 1 wt% to 100 wt% based on 100 wt% of the plating solution.
